# EUROPEAN PATENT APPLICATION

(11) **EP 2 264 871 A1**
(43) Date of publication of application: **22.12.2010**
(21) Application number: 09162834.7
(22) Date of filing: 16.06.2009
(51) Int. Cl.: H02K 9/24, H02K 5/124

(54) **Sealed Electric Machine or Generator**

(71) Applicant: Alstom Technology Ltd, 5400 Baden (CH)
(72) Inventor: Hug, Rene, 68169 Mannheim (DE); Langenbacher, Klaus, 67366 Weingarten (DE)

(57) **Abstract**

The sealed electric machine or generator (1) comprises a casing (2) housing a stator (3) and a rotor (4). The casing (2) is provided with two seal rings (5) arranged to seal the inner (6) of the casing (2) against the outer environment (7). The seal rings are connected to an emergency liquid supply circuit comprising a supply branch (10) with a pump (11) activated by a motor (12) fed by a battery (13). The sealed electric generator (1) also comprises a differential pressure sensor (15) arranged to measure the differential pressure between the inner (6) of the casing (2) and the pressure of the supply branch to regulate the liquid flow rate in accordance with the measured pressure and thus regulate the liquid pressure drop within the seal ring (5). The pressure sensor (15) is connected to a control unit (16) that drives a regulator (17) of the electric power fed from the battery (13) to the motor (12), such that the flow rate of the liquid in the seal ring (5) is regulated by regulating the electric power fed to the motor (12).

## Description

### TECHNICAL FIELD

The present invention relates to a sealed electric machine or generator.

In particular the invention refers to an emergency seal circuit for a generator/electrical machine, for sealing the pressurised inner gas atmosphere (normally H₂) of the electric machine against the outer atmosphere (air).

In the following particular reference will be made to an electric generator, it is anyhow clear that the invention is also applicable to any sealed electric machine also not being a generator.

### BACKGROUND OF THE INVENTION

Sealed electric generators are known to comprise a casing containing a stator and a rotor that is connected via a shaft to a motor (typically a steam turbine or a gas turbine).

The casing is provided with (usually) two seal rings (one at each side end of the rotor) that seal the inner of the generator (normally containing H₂) against the outer atmosphere.

The seal rings are connected to a supply circuit comprising a pump (or more than one pump to guarantee the necessary redundancy) that constantly pumps oil with a constant mass flow rate into the seal rings with a pressure higher than the generator inner pressure.

In the simplest embodiment, oil is fed to the seal rings through a central joint; in the seal ring the oil is diverted such that a portion goes towards the inner of the generator, where it is collected and discharged via an inner discharge branch of the supply circuit, and a further portion goes towards the outer of the generator, where it is collected and discharged via an outer branch of the supply circuit (the circuit is closed for the liquid, but it is not pressure closed, as the inner discharge branch has the generator inner pressure and the outer discharge branch has the atmospheric pressure).

The mass flow rate passing through the seal rings defines the oil pressure drop in each seal ring.

As the oil pressure in the inner discharge branch is equal to the generator inner pressure, the oil mass flow rate passing through the seal rings must generate an oil pressure drop higher than the differential pressure between generator inner pressure and generator outer pressure to separate both atmospheres from each other.

Nevertheless, the generator inner pressure depends on a plurality of factors, such as the heat load of the generator, the temperature of the generator gas cooling water and is therefore not constant during operation.

Because of all these factors, generators are usually also provided with pressure regulation systems, arranged to keep the generator inner pressure as constant as possible, nevertheless variation of the generator inner pressure cannot be avoided.

In addition, the oil pressure drop in the seal rings depends on the number and dimensions of the possible abrasions that during normal operation form in the seal rings.

In particular the oil pressure drop decreases with abrasions or seal rings damages; in this case more oil has to flow through the seal rings to reach the needed differential pressure.

For these reasons the mass flow rate passing through the seal rings cannot be constant, but must be regulated such that the oil mass flow rate passing through each seal ring generates a differential pressure substantially equal to the differential pressure between the oil supplied to the seal ring and the generator inner pressure (this pressure being the same as the pressure of the oil discharged from the inner of the generator).

Lacking such a regulation, the differential pressure in the seal rings may become too large, with risk of oil splashing in the generator, or too low, with risk of gas (H₂) release from the generator.

For this reason, traditional supply circuits are provided with a bypass operated by a differential pressure regulation valve.

During operation, the pump supplies a constant amount of oil greater than that needed by the rings, and the differential pressure regulation valve measures the differential pressure between the oil fed to the generator (measured at a supply branch of the supply circuit) and the generator inner pressure (measured at a discharge branch of the supply circuit) to drive the bypass, such that a part of the oil is diverted to a reservoir before it reaches the seal rings and only the needed amount of oil is fed to the seal rings.

In this way the total mass flow rate is adjusted to the needed amount of oil and also a very quick increase of the flow rate is possible, because the pump generates a large amount of pressurised oil that is partly diverted (in critical situations increase of oil mass flow rate must be provided is a second or less).

Nevertheless, in case a blackout of power supply occurs, the gas contained in the generator (i.e. usually H₂) could stream into the power plants turbine hall and impair the power plant and its auxiliary devices.

For this reason emergency seal circuits are provided for sealing the generator in such emergency cases (blackout of power) while the power plant is stopped or running down.

Traditional emergency seal circuits have a power plant battery that feeds (dc power) a motor activating a pump; the pump pumps a constant mass flow rate that is regulated via the bypass regulating the amount of oil supplied to the seal rings during normal operation.

Nevertheless, new generators have been developing in which the regulation of the liquid mass flow rate fed to the seal rings is not achieved through the bypass.

In these cases, the need for a different regulation of the oil fed to the seal rings exists, because the oil fed to the seal rings cannot be constant even in emergency cases, as it would cause the oil to stream into the generator.

### SUMMARY OF THE INVENTION

The technical aim of the present invention is therefore to provide a sealed electric machine or generator by which the said problems of the known art are eliminated.

Within the scope of this technical aim, an object of the invention is to provide a sealed electric machine or generator wherein the liquid fed to the seal rings is regulated without the use of a bypass that discharges the oil in excess of that needed according to the operating conditions.

The technical aim, together with these and further objects, are attained according to the invention by providing a sealed electric machine or generator in accordance with the accompanying claims.

In advantageous embodiments, the power needed from the battery to feed the motor activating the pump of the emergency circuit is limited when compared to corresponding traditional emergency circuits, because only the really needed mass flow rate is fed to the seal rings.

This lets smaller battery be used with a large cost save.

### BRIEF DESCRIPTION OF THE DRAWINGS

Further characteristics and advantages of the invention will be more apparent from the description of a preferred but non-exclusive embodiment of the sealed electric machine or generator according to the invention, illustrated by way of non-limiting example in the accompanying drawings, in which:
Figure 1 is a schematic view of a portion of a sealed electric machine in a first embodiment of the invention; and
Figure 2 is a schematic view of a portion of a sealed electric machine in a second embodiment of the invention.

### DETAILED DESCRIPTION OF THE INVENTION

With reference to the figures, these show a portion of a sealed electric generator 1 comprising a casing 2 housing a stator 3 and a rotor 4.

The casing 2 is further provided with two seal rings 5 (the figures only show one seal ring) arranged to seal the inner 6 of the casing 2 against the outer environment 7; for sake of simplicity in the following reference to only one seal ring 5 is made.

Each seal ring 5 is connected to a supply circuit (of traditional type with bypass or of new type without bypass).

The seal ring 5 is also connected to an emergency liquid supply circuit comprising at least a supply branch 10 (in different embodiments it may also comprise more than one supply branch) with at least a pump 11 (only one pump is shown, but typically more than one pump is provided for the necessary redundancy) activated by a motor 12 fed by a battery 13.

The sealed electric generator 1 also comprises a pressure sensor 15 arranged to measure the pressure inside of the casing 2 to regulate the liquid flow rate in accordance with the measured pressure and thus regulate the liquid pressure drop within the seal ring 5.

The pressure sensor 15 is connected to a control unit 16 that drives a regulator 17 of the electric power fed from the battery 13 to the motor 12, such that the flow rate of the liquid in the seal ring 5 is regulated by regulating the electric power fed to the motor 12.

In addition, the generator 1 comprises an inner discharge branch 20 for taking up the liquid discharged from the seal ring 5 towards the inner of the casing 2, and an outer discharge branch 21 for taking up the liquid discharged from the seal ring 5 towards the outer environment 7; the pressure sensor 15 is arranged to measure the differential pressure between two branches among the at least a supply branch 10, the inner discharge branch 20 and the outer discharge branch 21.

The circuit is closed for the liquid, but it is not pressure closed, as the branch 20 has the generator inner pressure and the branch 21 has the atmospheric pressure.

The control unit 16 drives the regulator 17 such that when the pressure sensor 15 measures a differential pressure different from a prefixed differential pressure, the pump 11 pumps a liquid flow rate arranged to reset the differential pressure to the prefixed differential pressure.

In particular, the pressure sensor 15 is connected between the supply branch 10 and the inner discharge branch 20, and when it measures a differential pressure greater than the prefixed differential pressure, the control unit 16 drives the regulator 17 to decrease the liquid flow rate and thus to decrease the liquid pressure drop within the seal ring 5, and when it measures a differential pressure lower than the prefixed differential pressure, the control unit 16 drives the regulator 17 to increase the liquid flow rate to increase the pressure drop within the seal ring 5.

The control unit 16 comprises a PLC or a PC or different programmable electronic device, and the pump 11 increases or decreases the liquid mass flow rate.

The circuit comprising the supply branch 10, the inner discharge branch 20 and the outer discharge branch 21 also comprises a reservoir 24 that feeds the supply branch 10 and into which the inner and outer discharge branches 20, 21 discharge.

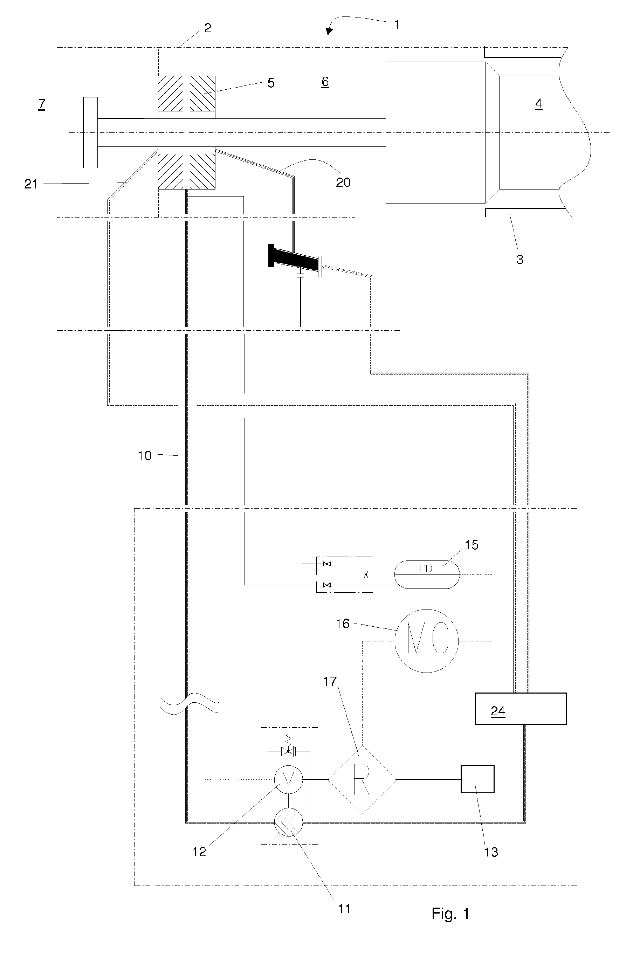

Figure 1 shows a first embodiment of the invention.

In this embodiment the motor 12 is a dc motor, and the regulator 17 is a variable resistor in series to the dc motor 12 driving the pump 11; the variable resistor is for example a potentiometer or a trim-pot with actuator that can be regulated between 0-100% or any value up to 100% if there is an additional differential pressure regulating valve for controlling the low value area (low load).

The operation of the sealed electric generator in the first embodiment of the invention is apparent from that described and illustrated and is substantially the following.

The pump 11 pumps the liquid through the supply branch 10 in the seal ring 5.

The liquid passes through the seal ring 5, streaming towards the inner of the generator and the outer of the generator; then it is collected to be discharged via the inner discharge branch 20 and the outer discharge branch 21 to the reservoir 24 (before it is fed to the reservoir 24 the liquid may also be degassed, cooled, filtered or handled in any other way).

The pressure sensor 15 measures the differential pressure between the supply branch 10 and the inner discharge branch 20 (this pressure is indicative of the inner pressure of the generator and it also gives an indication if the motor speed has to be increased or decreased or kept constant) and sends a signal indicative of such a differential pressure to the control unit 16.

The control unit 16 compares this differential pressure with a differential pressure stored in its memory and drives the regulator (i.e. the variable resistor 17) accordingly.

In particular when the measured differential pressure is greater than the prefixed differential pressure (stored in the memory of the control unit 16), the liquid mass flow rate and the drop pressure through the seal ring must be decreased.

In this case the resistance of the variable resistors 17 is increased (i.e. it is increased towards 100%), such that the electric dc power undergoes a higher voltage drop, which leads to a lower voltage supply for the dc motor. Thus the motor speed is lowered, the liquid mass flow rate is lowered and also the liquid pressure drop in the seal ring 5 is lowered.

On the contrary, when the measured differential pressure is lower than the prefixed differential pressure, the liquid mass flow rate and the drop pressure through the seal ring must be increased.

In this case the resistance of the variable resistor 17 is decreased (i.e. it is decreased towards 0%) such that the electric dc power undergoes a lower voltage drop, which leads to a higher voltage supply for the dc motor. Thus the motor speed is increased, the liquid mass flow rate is increased and also the liquid drop in the seal ring is increased.

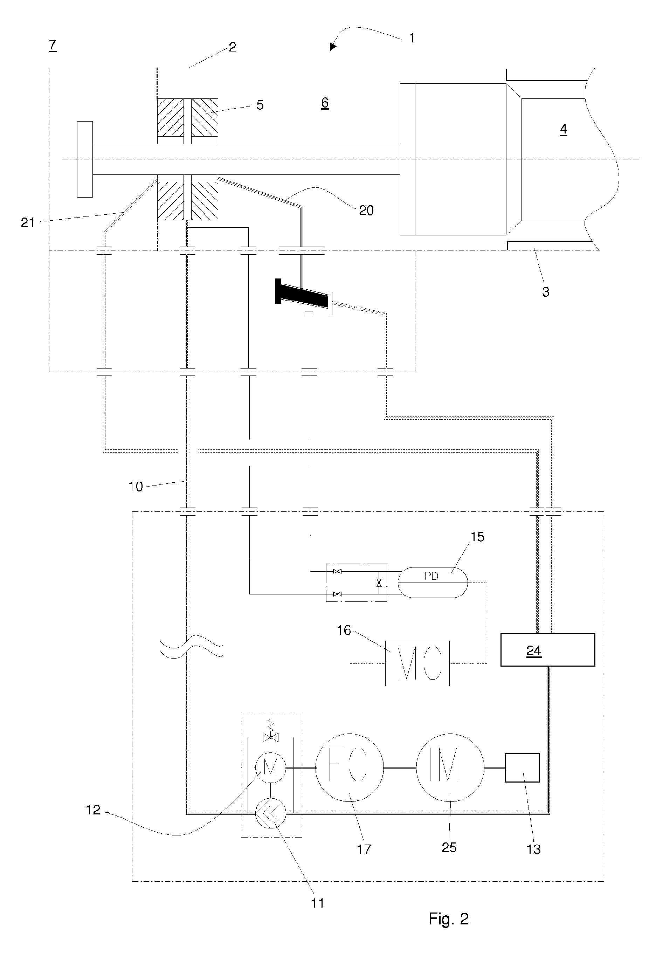

Figure 2 is a different embodiment of the invention, in which the motor 12 is a three phase asynchronous motor or a three phase synchronous motor fed by the battery 13 via an inverter 25.

In this embodiment the regulator 17 is a frequency converter that is fed from the inverter 25 and feeds the motor 12.

The operation of the sealed electric generator in the second embodiment of the invention is apparent from that described and illustrated and is substantially the following.

The pump 11 pumps the liquid through the supply branch 10 in the seal ring 5.

The liquid passes through the seal ring 5 towards the inner of the generator and the outer of the generator and is collected to be discharged via the inner discharge branch 20 and the outer discharge branch 21 to the reservoir 24 (before it is fed to the reservoir 24 the liquid may also be degassed, cooled, filtered).

The pressure sensor 15 measures the differential pressure between the supply branch 10 and the inner discharge branch 20 (this pressure is indicative of the inner pressure of the generator and gives an indication if the motor speed has to be increased or decreased or kept constant) and sends a signal indicative of such a differential pressure to the control unit 16.

The control unit 16 compares this differential pressure with a prefixed differential pressure stored in its memory and drives the regulator (i.e. the frequency converter 17) accordingly.

In particular when the measured differential pressure is greater than the prefixed differential pressure stored in the memory of the control unit 16, the liquid mass flow rate and the drop pressure through the seal ring 5 must be decreased.

In this case the battery 13 feeds dc electric power to the inverter 25 that converts the dc electric power into three phase ac electric power with a static frequency that is fed to the frequency converter 17 that is driven by the control unit 16.

The control unit 16 drives the frequency converter 17 such that it decreases the frequency of the electric power fed to the motor 12; when the frequency of the electric power fed to the motor 12 decreases, also the velocity of the motor and the velocity of the pump decrease and thus the liquid mass flow rate decreases.

Thus also the liquid pressure drop decreases to a value closer to the prefixed differential pressure.

When the measured differential pressure is lower than the prefixed differential pressure, the liquid mass flow rate and the drop pressure through the seal ring must be increased.

The battery 13 feeds dc electric power to the inverter 25 that converts the dc electric power into three phase ac electric power with a static frequency that is fed to the frequency converter 17 that is driven by the control unit 16.

The control unit 16 drives the frequency converter 17 such that it increases the frequency of the electric power fed to the motor 12; when the frequency of the electric power fed to the motor 12 increases, also the velocity of the motor and the velocity of the pump increase and thus the liquid mass flow rate increases.

Thus also the liquid pressure drop increases to a value closer to the prefixed differential pressure.

In particular, in case the seal circuit is a single circuit, the pump 11 of the emergency circuit is in parallel to the other pumps used during normal operation.

In case the seal circuit is a triple circuit (i.e. the seal ring and the supply circuit have an outer (air), an intermediate (pure oil) and an inner (H₂) circuit) the pump 11 of the emergency circuit is parallel only to the outer circuit (i.e. the intermediate and the inner circuit have no emergency circuit).

The sealed electric machine or generator conceived in this manner is susceptible to numerous modifications and variants, all falling within the scope of the inventive concept; moreover all details can be replaced by technically equivalent elements.

In practice the materials used and the dimensions can be chosen at will according to requirements and to the state of the art.

### REFERENCE NUMBERS

- 1: sealed electric generator
- 2: casing
- 3: stator
- 4: rotor
- 5: seal ring
- 6: inner of the casing
- 7: outer environment
- 10: supply branch
- 11: pump
- 12: motor
- 13: battery
- 15: pressure sensor
- 16: control unit
- 17: regulator
- 20: inner discharge branch
- 21: outer discharge branch
- 24: reservoir
- 25: inverter

## Claims

1. Sealed electric machine or generator (1) comprising a casing (2) housing a stator (3) and a rotor (4), said casing (2) being further provided with at least one seal ring (5), arranged to seal the inner (6) of the casing (2) against the outer environment (7), connected to an emergency liquid supply circuit comprising at least a supply branch (10) with at least a pump (11) activated by a motor (12) fed by a battery (13), said sealed electric generator (1) also comprising a pressure sensor (15) arranged to measure the pressure in the inner (6) of the casing (2) to regulate the liquid flow rate in accordance with the measured pressure and thus regulate the liquid pressure drop within the seal ring (5), **characterised in that** said pressure sensor (15) is connected to a control unit (16) that drives a regulator (17) of the electric power fed from the battery (13) to the motor (12), such that the flow rate of the liquid in the seal ring (5) is regulated by regulating the electric power fed to the motor (12).

2. Sealed electric machine or generator (1) as claimed in claim 1, **characterised by** comprising an inner discharge branch (20) for taking up the liquid discharged from the seal ring (5) towards the inner (6) of the casing (2) and an outer discharge branch (21) for taking up the liquid discharged from the seal ring (5) towards the outer environment (7), wherein the pressure sensor (15) is arranged to measure the differential pressure between two branches among the at least a supply branch (10), the inner discharge branch (20) and the outer discharge branch (21).

3. Sealed electric machine or generator (1) as claimed in claim 2, **characterised in that** the control unit (16) drives the regulator (17) such that when the pressure sensor (15) measures a differential pressure different from a prefixed differential pressure, the pump (11) pumps a liquid flow rate arranged to reset the differential pressure to the prefixed differential pressure.

4. Sealed electric machine or generator (1) as claimed in claim 3, **characterised in that** said pressure sensor (15) is connected between one of the at least a supply branch (10) and the inner discharge branch (20), and **in that** when it measures a differential pressure greater than the prefixed differential pressure, the control unit (16) drives the regulator (17) to decrease the liquid flow rate and thus to decrease the liquid pressure drop within the seal ring (5), and when it measures a differential pressure lower than the prefixed differential pressure, the control unit (16) drives the regulator (17) to increase the liquid flow rate to increase the pressure drop within the seal ring (5).

5. Sealed electric machine or generator (1) as claimed in claim 1, **characterised in that** said control unit (16) comprises a PLC or a PC or different programmable electronic device.

6. Sealed electric machine or generator (1) as claimed in claim 1, **characterised in that** the pump (11) increases or decreases the liquid mass flow rate.

7. Sealed electric machine or generator (1) as claimed in claim 1, **characterised in that** the said motor (12) is a dc motor, and **in that** said regulator (17) is a variable resistor.

8. Sealed electric machine or generator (1) as claimed in claim 7, **characterised in that** said regulator (17) is a variable resistor in series to the dc motor (12).

9. Sealed electric machine or generator (1) as claimed in claim 8, **characterised in that** said variable resistor is a potentiometer or a trim-pot with actuator that can be regulated between 0-100%.

10. Sealed electric machine or generator (1) as claimed in claim 9, **characterised by** comprising a pressure regulating valve for low load purposes.

11. Sealed electric machine or generator (1) as claimed in claim 1, **characterised in that** said motor (12) is a three phase asynchronous motor or a three phase synchronous motor fed by said battery (13) via an inverter (25).

12. Sealed electric machine or generator (1) as claimed in claim 11, **characterised in that** said inverter converts the dc electric power of said battery into ac electric power with a static frequency.

13. Sealed electric machine or generator (1) as claimed in claim 11, **characterised in that in that** said regulator (17) is a frequency converter that is fed from the inverter (25) and feeds the motor (12).

14. Sealed electric machine or generator (1) as claimed in claim 2, **characterised in that** the circuit comprising the supply branch (10), the inner discharge branch (20) and the outer discharge branch (21) is closed for the liquid, but it is not pressure closed, and **in that** the inner discharge branch (20) has the generator inner pressure, and the outer discharge branch (21) has the atmospheric pressure.

15. Sealed electric machine or generator (1) as claimed in claim 14, **characterised in that** the circuit comprising the supply branch (10), the inner discharge branch (20) and the outer discharge branch (21) also comprises a reservoir (24) that feeds the supply branch (10) and into which the inner and outer discharge branches (20, 21) discharge.
